# EUROPÄISCHE PATENTANMELDUNG

(11) **EP 4 381 989 A1**
(43) Veröffentlichungstag der Anmeldung: **12.06.2024**
(21) Anmeldenummer: 22211391.2
(22) Anmeldetag: 05.12.2022
(51) Int. Cl.: A45C 13/28, G06F 1/16, G06F 3/0354, A45F 5/10

(54) **KOMBINIERTE TOUCHSTIFT-HALTE- UND GRIFFVORRICHTUNG FÜR PORTABLEN COMPUTER UND GEHÄUSE EINES PORTABLEN COMPUTERS**

(71) Anmelder: Systec & Solutions GmbH, 76131 Karlsruhe (DE)
(72) Erfinder: LINDER, Philipp, 76131 Karlsruhe (DE)
(74) Vertreter: mepat Patentanwälte

(57) **Zusammenfassung**

Die vorliegende Erfindung stellt eine kombinierte Touchstift-Halte- und Griffvorrichtung (1) bereit, die dazu ausgebildet ist, an einem Befestigungsabschnitt (111) eines Gehäuses (110) eines portablen Computers (100) mit einem Touch-Display (120) befestigt zu werden, sowie das Gehäuse (110) eines portablen Computers (100) mit einer solchen Touchstift-Halte- und Griffvorrichtung (1) selbst. Dabei weist die kombinierte Touchstift-Halte- und Griffvorrichtung (1) einen Touch-Stift (2) auf, der zum berührenden Betätigen des Touch-Displays (12) vorgesehen ist, und zumindest einen Haltestab (3, 4, 4'), der einenends eine Halteöse (41) mit einem Innenumfang (42) hat, der einem Außenumfang des Mantels (21) des Touch-Stifts (2) entspricht. In einer Benutzungsanordnung ist in der kombinierten Touchstift-Halte- und Griffvorrichtung (1) der Touch-Stift (2) in der Halteöse (41) des Haltestabs (3,4,4') lösbar festgelegt.

## Beschreibung

Die Erfindung betrifft eine kombinierte Touchstift-Halte- und Griffvorrichtung zur Befestigung an einem Gehäuse eines portablen Computers mit einem Touch-Display und ein Gehäuse eines solchen portablen Computers mit der kombinierten Touchstift-Halte- und Griffvorrichtung.

Aus dem Stand der Technik ist es bekannt, portable Computer wie etwa Laptops oder Tablets zum Tragen in eine Tasche mit entsprechendem Henkel zu packen, oder auch in eine Hülle zu stecken, die über eine Tragevorrichtung verfügt; als Alternativen gibt es auch anklebbare Halterungen, die etwa an der Rückseite eines Gehäuses angeklebt werden können, so dass der Computer auch bei Tätigkeiten, die etwa im Stehen oder beim Gehen durchgeführt werden, geschickter genutzt werden kann.

Inzwischen ist auch ein Tablet bekannt, dessen Gehäuse so großzügig geschnitten ist, dass eine Ausnehmung Platz findet, die als Griff genutzt werden kann: https://shop.exone.de/blog/pokini-tablet-mit-griff-ganz-genau. Allerdings verlangt diese Gestaltung eben eine Vergrößerung des Gehäuses und die Ausnehmung dient ausschließlich dazu, hindurch zu greifen.

Auch Touchstift-Halterungen an sich sind aus dem Stand der Technik bekannt. So werden auf der Internetseite http://touch-pen.com/profi-touchpen eine Vielzahl Halterungen angeboten, die im Wesentlichen aus einem Befestigungselement, meist nach Art eines Saugnapfes, der auch an einem Computergehäuse oder einem sonstigen, in Nähe des Computers befindlichen Gegenstand angeklebt oder angesaugt werden kann, bestehen, an dem dann meist eine Schnur befestigt ist, die eine Schlaufe am Ende hat, in die der Touchstift eingesteckt werden kann; dieser kann dann oft außerdem an dem saugnapfartigen Element, wenn es eine Klemmfunktion hat, befestigt werden.

Ausgehend von diesem Stand der Technik ist es Aufgabe der vorliegenden Erfindung, eine verbesserte Touchstift-Haltevorrichtung bereitzustellen.

Diese Aufgabe wird durch eine Vorrichtung mit den Merkmalen des Anspruchs 1 gelöst.

Die weitere Aufgabe, ein verbessertes Gehäuse für portable Computers mit Touch-Display bereitzustellen, wird durch die Vorrichtung mit den Merkmalen des unabhängigen Anspruchs 5 gelöst.

Bevorzugte Ausführungsformen der Vorrichtungen sind in den Unteransprüchen ausgeführt.

Eine erste Ausführungsform der erfindungsgemäßen kombinierten Touchstift-Halte- und Griffvorrichtung, die so gestaltet und dazu vorgesehen ist, an einem Befestigungsabschnitt eines Gehäuses eines portablen Computers mit einem Touch-Display befestigt zu werden, umfasst einen Touch-Stift, der zum berührenden Betätigen des Touch-Displays ausgebildet ist. Sie weist weiter zumindest einen Haltestab auf, der einenends eine Halteöse mit einem Innenumfang hat, der einem Außenumfang des Touch-Stifts entspricht. In einer Benutzungsanordnung der kombinierten Touchstift-Halte- und Griffvorrichtung ist der Touch-Stift in der Halteöse des Haltestabs lösbar festgelegt.

Damit wird eine schicke und unaufwändige Doppellösung, quasi ein "T-Griff" oder ein Griff im "T-Design" geschaffen, um einerseits einen Touch-Stift jederzeit unverlierbar positioniert zu haben und andererseits, um einen einfachen und eleganten Griff, der bequem von einer Hand gegriffen werden kann durch einfache Nutzung des Touch-Stiftes zu bekommen.

Nach einer weiteren Ausführungsform der erfindungsgemäßen kombinierten Touchstift-Halte- und Griffvorrichtung weist diese zumindest zwei Haltestäbe auf, die ebenfalls jeweils einenends eine solche Halteöse mit einem Innenumfang haben, der dem Außenumfang des Touch-Stifts entspricht. Bei dieser alternativen Gestaltung liegen die zwei Haltestäbe parallel zueinander und mit den Halteösen in die gleiche Richtung weisend und um eine vorbestimmte Strecke voneinander beabstandet vor. Dabei ist die Strecke, um die die Haltestäbe voneinander beabstandet sind, kürzer als der Touch-Stift lang ist.

Nach noch einer weiteren Ausführungsform der erfindungsgemäßen Vorrichtung hat der eine Haltestab oder eben ein erster Haltestab, wenn zwei oder mehr Haltestäbe zum Einsatz kommen, an einem Innenumfang der Halteöse eine Klemmvorrichtung, die dazu ausgebildet ist, den Touch-Stift in der Halteöse zu sichern.

Die Klemmvorrichtung an dem Innenumfang der Halteöse kann aus einem oder mehreren O-Ringen bestehen, etwa aus einem Elastomer; ein einfacher Ring aus einem elastischen Schaumstoff ist ebenfalls denkbar. Grundsätzlich ist auch ein magnetisches Element einsetzbar, etwa auch ein magnetischer Ring, der mit einem metallischen Touch-Stift in Eingriff kommt. Es wäre auch denkbar, einen Druckstift, oder einen Federstift in der Halteöse anzubringen, oder eine Fixierschraube. Es kann geeignet sein, in der Halteöse eine Ausnehmung mit einer geeigneten geometrischen Form vorzusehen, die den Druckstift oder den Federstift aufnehmen kann.

Darüber hinaus kann die Klemmvorrichtung in der Halteöse eine Bohrung aufweisen, die ein von dem Touch-Stift ausgehendes bzw. mit diesem verbundenen oder verbindbares Sicherungskabel aufnimmt. Diese Lösung dient vorteilhaft dem Diebstahlschutz.

Nach einer noch weiteren Ausführungsform der erfindungsgemäßen Vorrichtung hat bei der Alternative mit zwei Haltestäben ein erster der beiden Haltestäbe an seiner von dem jeweils anderen Haltestab weg weisenden Seite an dem Innenumfang zumindest eine Arretiervorrichtung. Der Touch-Stift kann erfindungsgemäß mit einem Ende eines ersten Abschnitts in der Halteöse des ersten Haltestabs lösbar angeordnet werden; er wird dabei an oder gegen die Arretiervorrichtung abgestützt festgelegt und somit vor dem Durchrutschen bewahrt. Mit einem zweiten Abschnitt ist der Touch-Stift entsprechend in der Halteöse des zweiten Haltestabs lösbar festgelegt, so dass sich seine Touch-Spitze aus der Halteöse herauserstreckt.

"Lösbar festgelegt" meint hierin "einsteckbar" oder mit anderen Worten: Der Touch-Stift kann, wenn er nicht benutzt wird, oder wenn die Vorrichtung als Griff genutzt werden soll, einfach in eine einzige oder eben in die beiden oder mehr Halteösen eingesteckt werden und wird so sicher und geschickt gehaltert.

Bei der Ausführungsform mit der Arretiervorrichtung sorgt diese, allein oder ergänzend zu einer Klemmvorrichtung in der anderen Halteöse, dafür, dass der Touch-Stift am Ort bleibt. Wird er zum Zweck des Betätigens des Touch-Screens benötigt, kann er einfach aus einer oder beiden Halteösen gelöst bzw. herausgezogen werden. Wird hingegen durch das Einschieben des Touch-Stifts die Griff-Funktion hergestellt, kann der portable Computer durch Umgreifen mit der Hand des Nutzers gehalten und getragen werden. So bildet die erfindungsgemäße Vorrichtung geschickt eine Doppelfunktion aus und dient einerseits dem sicheren Verwahren des Touch-Stifts und zugleich dem geschickten Nutzen als Griff.

Erfindungsgemäß werden die beiden Haltestäbe dann, wenn sie die erfindungsgemäße Vorrichtung bilden, so nebeneinander positioniert, dass der Mantel des Touch-Stifts von den beiden Halteösen umfasst ist. Wird der Touch-Stift in die Halteösen eingeschoben, so führt man ihn durch die eine Halteöse hindurch bis zur anderen, dort stoppt er an der Arretiervorrichtung. Die Touchspitze, also das Funktionselement des Touch-Stifts, ragt dann aus der zuletzt passierten Halteöse heraus.

"Befestigungsabschnitt" eines Gehäuses eines portablen Computers mit einem Touch-Display meint hierin im Wesentlichen den Teil des portablen Computers, der von einem Nutzer zum Tragen gegriffen werden soll; das wird ein mittlerer Abschnitt einer der Rahmenseiten eines rechteckigen portablen Computers sein.

Grundsätzlich wird die Erfindung mit einem einzigen Haltestab oder durch zwei Haltestäbe realisiert, es könnten auch mehr als zwei Haltestäbe genutzt werden. Bei der üblichen Touch-Stift-Größe sind zwei Haltestäbe geschickt und genügen zur Brückenbildung mit dem Touch-Stift, um den Griff auszubilden.

Nach einer weiteren Ausführungsform der erfindungsgemäßen kombinierten Touchstift-Halte- und Griffvorrichtung ist die Arretiervorrichtung ein Pin oder ein Überstand oder ein Ring oder ein Ringabschnitt. Weitere Alternativen, etwa Geometriepaare nach Puzzle-Art, oder Klemmelemente sind denkbar. Die jeweiligen Elemente kontaktieren das Ende des Touchstifts, also das von der Touchspitze abgewandte Ende. Dieses Ende des Touchstifts wird so am Herausrutschen aus der Halteöse gehindert.

Nach noch einer weiteren Ausführungsform der erfindungsgemäßen kombinierten Touchstift-Halte-und Griffvorrichtung kann das Ende des Touchstifts mit der jeweiligen Arretiervorrichtung korrespondierend ausgebildet sein. Der Touch-Stift kann an seinem ersten Abschnitt eine Verriegelungsausnehmung aufweisen, die mit dem Pin oder dem Überstand oder dem Ringabschnitt lösbar in Rasteingriff bringbar ist. Wird ein Pin verwendet, so könnte eine Ummantelung bzw. der Mantel des Touchstifts etwa eine korrespondierende Nut aufweisen, die über den Pin geschoben wird; dasselbe gilt, wenn ein Überstand vorliegt. Bei einem Ringabschnitt, ggf. auch mit Steigung, kann der Touchstift endständig mit einer umfänglichen Nut, auch mit Steigung, versehen und wie eine Schraube in eine Bohrung mit Gewinde eingedreht werden.

Um die kombinierte Touchstift-Halte- und Griffvorrichtung an dem Gehäuse des portablen Computers mit Touch-Display zu befestigen, hat nach noch einer weiteren Ausführungsform der erfindungsgemäßen kombinierten Touchstift-Halte- und Griffvorrichtung jeder der zumindest zwei Haltestäbe an seinem von der jeweiligen Halteöse abgewandten Ende Befestigungsmittel. Dabei kann es sich um Bohrungen, Durchgangsöffnungen, Sackbohrungen oder auch um Magnetelemente handeln.

Bei einer ersten Ausführungsform eines erfindungsgemäßen Gehäuses eines portablen Computers mit einem Touch-Display weist das Gehäuse eine erfindungsgemäße kombinierte Touchstift-Halte- und Griffvorrichtung auf, die an einem Befestigungsabschnitt des Gehäuses befestigt ist.

Nach einer weiteren Ausführungsform des erfindungsgemäßen Gehäuses weist dieses einen Befestigungsabschnitt auf, an dem Befestigungsmittel angeordnet sind, die mit den Befestigungsmitteln korrespondieren, die jeder der zwei Haltestäbe der erfindungsgemä-ßen kombinierten Touchstift-Halte- und Griffvorrichtung an seinem von der jeweiligen Halteöse abgewandten Ende aufweist: Dabei können die Befestigungsmittel Befestigungsstifte, Schrauben, Pins oder Magnetelemente sein, entsprechend dem korrespondierenden Element, bei dem es sich um eine Bohrung, eine Durchgangsöffnung, eine Sackbohrung oder Magnetelemente handeln kann.

Das Gehäuse kann entsprechend zumindest einen magnetischen Abschnitt an dem Befestigungsabschnitt aufweisen.

Nach noch einer weiteren Ausführungsform des erfindungsgemäßen Gehäuses kann dieses das Gehäuse eines Tablet-Computers oder eines Laptops sein.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Frontansicht eines portablen Computers mit einem erfindungsgemäßen Gehäuse und einer erfindungsgemäßen kombinierten Touchstift-Halte- und Griffvorrichtung,
- **Fig. 2**: eine perspektivische Frontansicht auf einen Ausschnitt des Gegenstandes aus Fig. 1,
- **Fig. 3**: eine perspektivische Draufsicht auf die erfindungsgemäße kombinierte Touchstift-Halte- und Griffvorrichtung,
- **Fig.** 4: eine perspektivische Frontansicht auf die erfindungsgemäße kombinierte Touchstift-Halte- und Griffvorrichtung,
- **Fig. 5**: eine Seitenansicht auf die erfindungsgemäße kombinierte Touchstift-Halte- und Griffvorrichtung,
- **Fig. 6**: eine Frontansicht eines portablen Computers mit einem erfindungsgemäßen Gehäuse und einer erfindungsgemäßen kombinierte Touchstift-Halte- und Griffvorrichtung mit T-Griffform,
- **Fig. 7**: eine perspektivische Frontansicht auf einen Ausschnitt des Gegenstandes aus Fig. 6 mit T-Griffform,
- **Fig. 8**: eine perspektivische Draufsicht auf die erfindungsgemäße kombinierte Touchstift-Halte- und Griffvorrichtung mit T-Griffform,
- **Fig. 9**: eine perspektivische Frontansicht auf die erfindungsgemäße kombinierte Touchstift-Halte- und Griffvorrichtung mit T-Griffform,
- **Fig. 10**: eine Seitenansicht auf die erfindungsgemäße kombinierte Touchstift-Halte- und Griffvorrichtung mit T-Griffform.

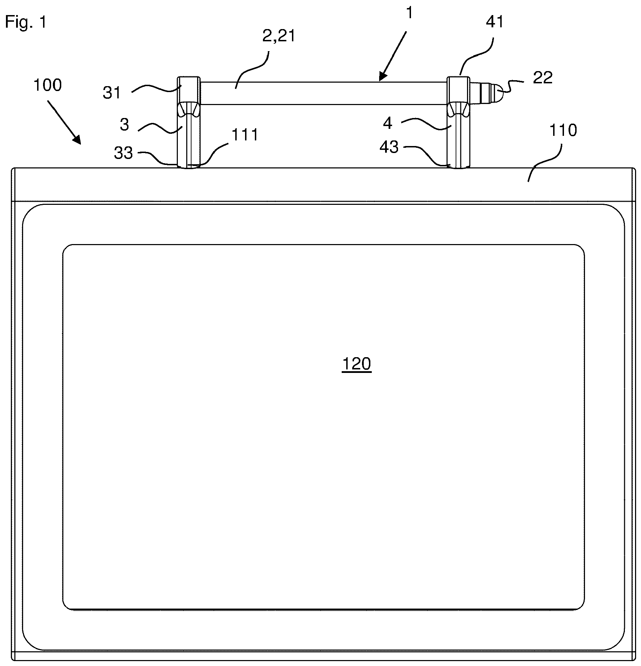

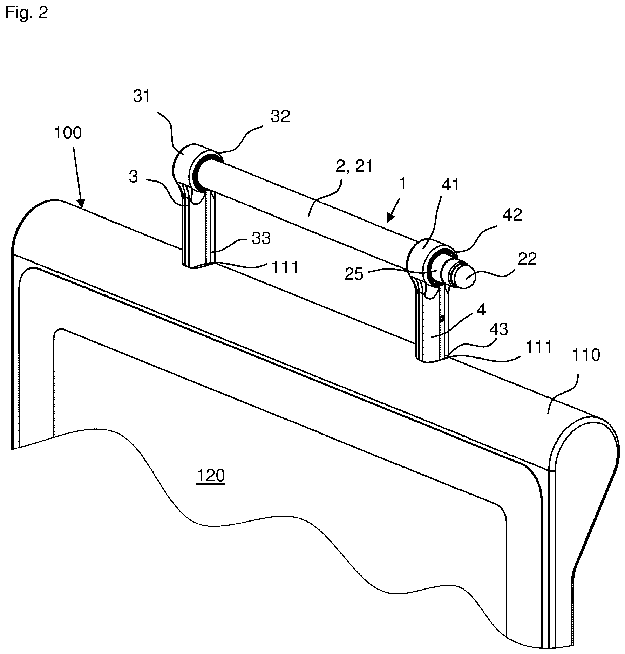

**Fig. 1 bis 5** zeigen eine erfindungsgemäße kombinierte Touchstift-Halte- und Griffvorrichtung 1 nach einer ersten Variante, die dazu ausgestaltet ist, dass sie an einem Befestigungsabschnitt 111 eines Gehäuses 110 eines portablen Computers 100 mit einem Touch-Display 120, siehe **Fig. 1** **und** **2****,** angeordnet werden kann.

Die kombinierte Touchstift-Halte- und Griffvorrichtung 1 verfügt über einen Touch-Stift 2 bekannter Art, wie diese Touch-Stifte 2, zum berührenden Betätigen des Touch-Displays üblicher Weise ausgestaltet sind: Die Stifte werden auch als Eingabestifte oder Touchpen bezeichnet und sie haben einen weichen Kern, der an seinem Betätigungsende in eine Spitze mündet, die oft wie eine kleine Kuppel ausgebildet ist. Umgeben wird der Kern von einer Hülle bzw. einem Mantel, der aus Kunststoff oder auch aus Metall bestehen kann.

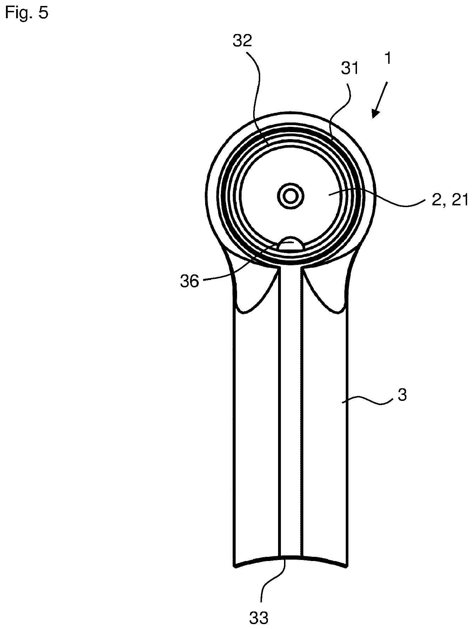

So zeigen die **Fig. 1 bis 5** einen Touch-Stift 2 mit einem Mantel 21 und einer Touch-Spitze 22, die aus dem Abschnitt 25 des Mantels 21 herausragt; am abgewandten Ende des Touch-Stiftes 2 ist der Abschnitt 25, siehe **Fig.** 5. Wie hier gezeigt, hat die kombinierte Touchstift-Halte- und Griffvorrichtung 1 in den **Fig. 1 bis 5** zwei Haltestäbe 3, 4, die an ihrem oberen Ende ("oberes Ende" ist hier das Ende, das bei Anordnung der Vorrichtung 1 an einem Befestigungsabschnitt 111 eines Gehäuses 110 eines Computers 100 sich nach oben erstreckt) eine Halteöse 31,41 aufweist, deren jeweiliger Innenumfang 32,42 einem Außenumfang des Mantels 21 des Touch-Stifts 2 entspricht.

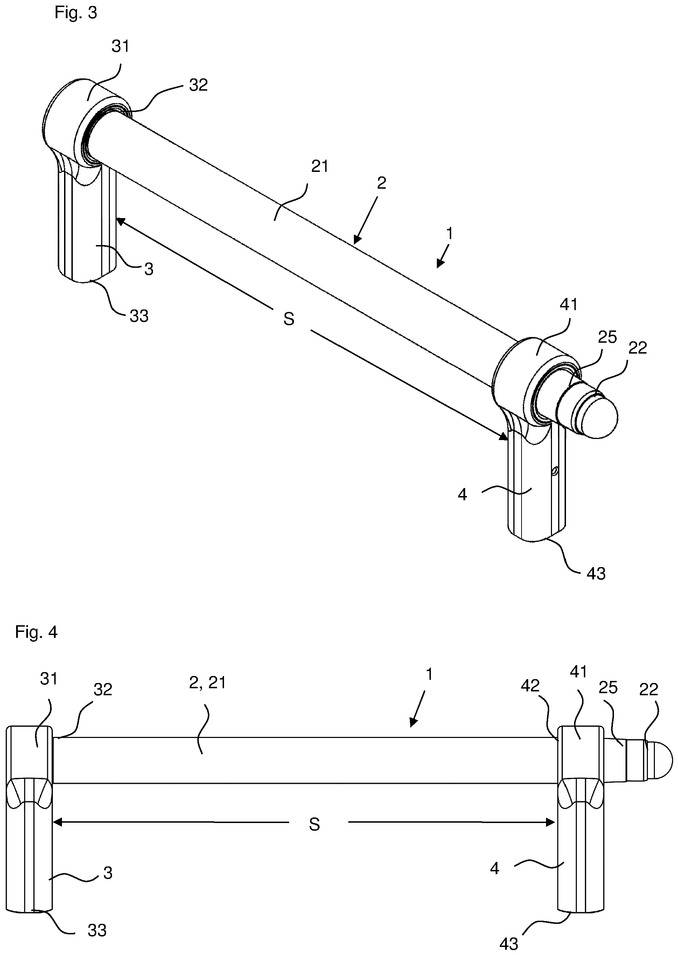

Wenn also in der Benutzungsanordnung, wie sie in den **Fig. 1** **und** **2** gezeigt ist, die zwei Haltestäbe 3,4 parallel zueinander und mit den Halteösen 31,41 in die gleiche Richtung weisend und um eine Strecke S, siehe **Fig. 4 und 3****,** voneinander beabstandet angeordnet sind, die kürzer ist als der Touch-Stift 2, und der Touch-Stift 2, mit seinen beiden Abschnitten 25, 26 in den Halteösen 31,41 aufgenommen ist, wird er sicher und lösbar gehalten.

Damit er nicht herausrutscht, verfügt der erste Haltestab 3 an seiner von dem zweiten Haltestab 4 weg weisenden Seite am Innenumfang 32 als Arretiervorrichtung 36 einen Pin 36. Natürlich könnten als Arretiervorrichtungen 36 auch andere Elemente wie Nasen, Stifte, Ringabschnitte oder auch einen ganzen umfänglich verlaufenden Ring, nicht figurativ gezeigt, eingesetzt werden.

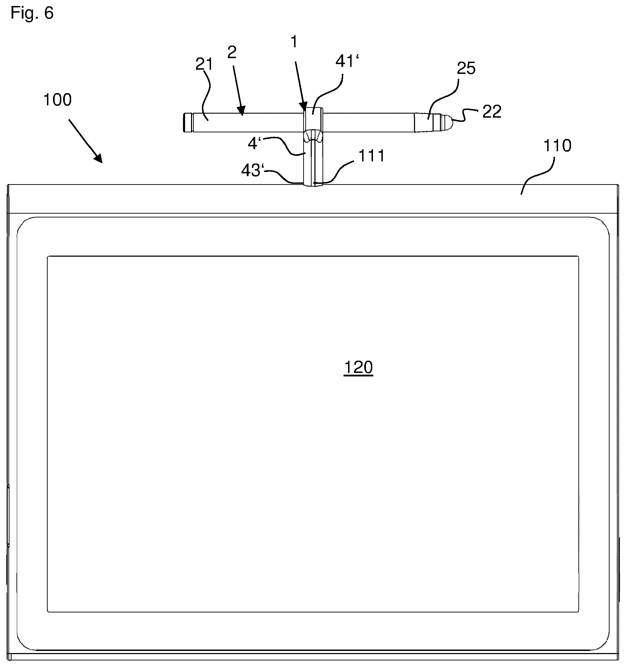

Um das Herausrutschen zu verhindern, könnte statt des Haltestabs 4 auch ein Haltestab 4', nachfolgend in **Figuren 6 bis 10** beschrieben, eingesetzt werden, der am Innenumfang 42` seiner Halteöse 41' ein Klemmelement 44 wie einen O-Ring oder ein anderes, möglichst elastisches Element aufweisen, das beim Hindurchschieben des Touch-Stifts 2 komprimiert wird und dadurch Klemmwirkung entfaltet.

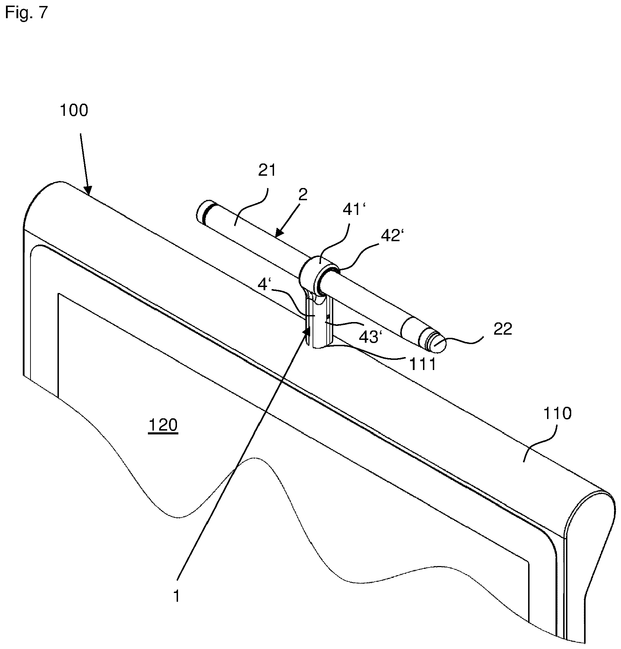

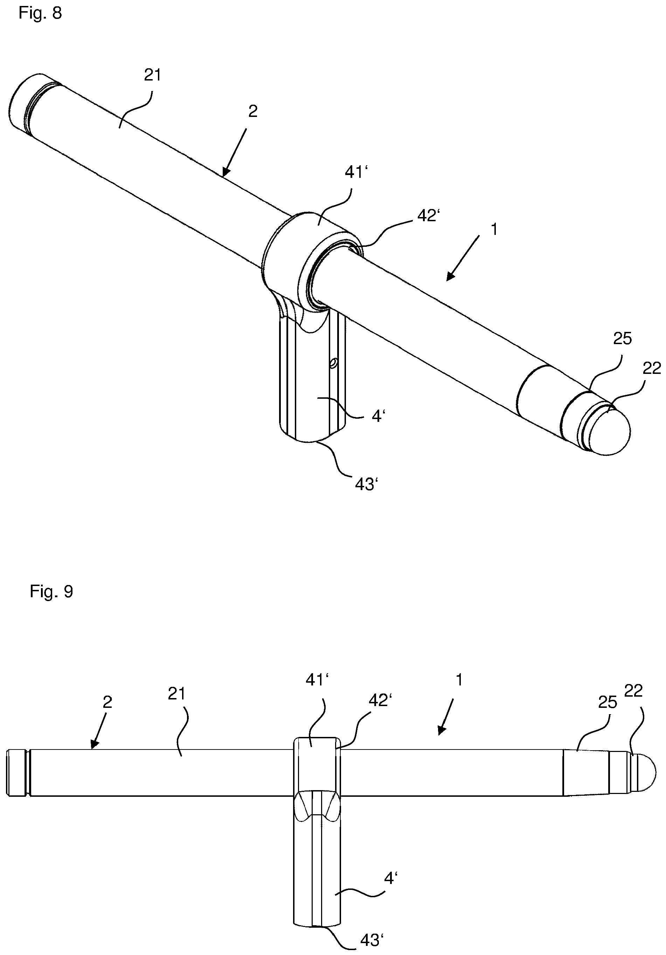

Wie in allen **Fig. 2****,** **3** für die Variante mit zwei Haltestäben und in den **Fig. 8** **und** **7** für die T-Griff-Variante mit nur einem Halteelement 4' hervorgehoben ist, sind die Halteelemente 3,4, 4` hier Rundstäbe, die sich an dem Ende der Halteösen 31,41 lollipopartig verbreitern. Das Material kann Metall sein, aber auch ein Kunststoff; natürlich könnte, abhängig vom Design des Computers - der etwa ein Tablet oder ein Laptop sein kann - ein passender Vierkantstab gewählt werden, auch die äußere Form der Öse kann entsprechend gestaltet werden.

Damit die kombinierte Touchstift-Halte- und Griffvorrichtung 1 an einem Gehäuse 110 eines Computers 100 mit Display 120 befestigt werden kann, hat jeder der zwei Haltestäbe 3,4 an einem von der jeweiligen Halteöse 31,41 abgewandten Ende Befestigungsmittel; figurativ nicht gezeigt. Es kann als Befestigungsmittel eine Bohrung, eine Durchgangsöffnung, eine Sackbohrung oder auch ein oder mehrere Magnetelemente an jedem der Haltestäbe 3,4 vorliegen.

Die figurativ gezeigte kombinierte Touchstift-Halte- und Griffvorrichtung 1 ist in **Fig. 1** **und** **2** nach einer ersten Variante und in **Fig. 6** **und** **7** nach einer zweiten, der T-Griff-Variante, am Gehäuse 110, genauer dort am Rahmen einer oberen Kante des Tablets 100 mit Touch-Display 120 angeordnet, und bildet ein doppelfunktionales Element: So, wie **Fig. 1** **und** **2** gezeigt, wird ein Griff gebildet, der es erlaubt, mit der Hand einfach hindurchzugreifen und das Tablett 100 zu tragen oder auch im Stehen geschickt zu halten und es zur Arbeit zu nutzen; sobald das Touch-Display 120 eine Eingabe erhalten soll, kann der Touchstift 2 leicht zuerst aus der Halteöse 31, und dann mit seinem hinteren Abschnitt 36 mit seiner Touch-Spitze 22 voraus, aus der Halteöse 41 gezogen werden. **Fig. 3 und 4** zeigen ebenfalls die Positionierung des Touchstiftes 2, gehalten von den beiden Halteösen 31,41, wobei die Spitze 22 frei aus Halteöse 41 herausragt.

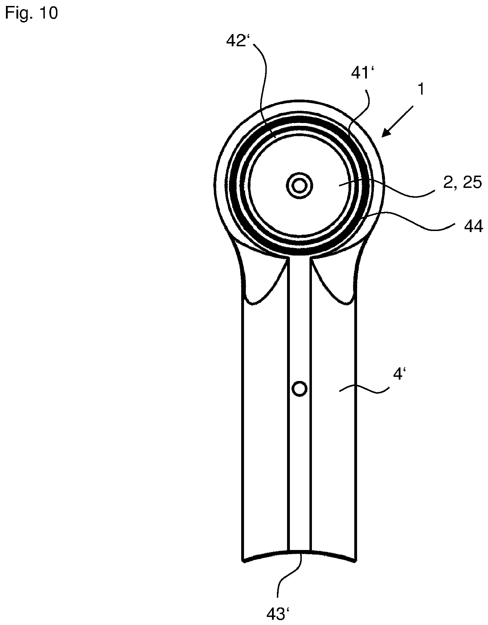

Nach der in **Fig. 6** **und** **7** gezeigten T-Griff-Variante wird ein schlichter und funktionaler Griff in T-Form gebildet, der von den Fingern einer Hand gegriffen werden kann, wobei der Haltestab 4' zwischen zwei Fingern der Hand zu liegen kommt. Soll der Touchstift 2 genutzt werden, wird er aus der Halteöse 41' herausgezogen; das Klemmelement 44, das in der Halteöse 41' am Innenumfang 42` liegt, in **Fig. 10** auch gezeigt, gibt den Mantel 21 des Touchstiftes 2 frei. **Fig. 8 und** 9 zeigen deutlich die mittige Positionierung des Touchstiftes 2 in der Halteöse 41'.

Damit die Touchstift-Halte- und Griffvorrichtung 1 sicher an dem Gehäuse 110 befestigt werden kann, hat dieses einen Befestigungsabschnitt 111, geeigneter Weise mittig am oberen Rahmen, an dem Befestigungsmittel angeordnet sind, die mit den Befestigungsmitteln der Haltestäbe 3,4, 4' korrespondieren.

Wie zu sehen ist, sind die Befestigungsenden 33, 43, 43` der Haltestäbe 3,4, 4` beider Varianten zur spaltfreien und formschönen Befestigung der Form des Befestigungsabschnittes des Gehäuses 110 angepasst; hier ist das Gehäuse 110 gerundet und entsprechend sind dies die Halteelemente 3, 4, 4'.

## Patentansprüche

1. Kombinierte Touchstift-Halte- und Griffvorrichtung (1), ausgebildet zur Befestigung an einem Befestigungsabschnitt (111) eines Gehäuses (110) eines portablen Computers (100) mit einem Touch-Display (120), **wobei**
die kombinierte Touchstift-Halte- und Griffvorrichtung (1)
einen Touch-Stift (2), ausgebildet zum berührenden Betätigen des Touch-Displays (120), und zumindest einen Haltestab (3, 4, 4') aufweist, der einenends eine Halteöse (41) mit einem Innenumfang (42) hat, der einem Außenumfang des Mantels (21) des Touch-Stifts (2) entspricht,
wobei in einer Benutzungsanordnung der kombinierten Touchstift-Halte- und Griffvorrichtung (1) der Touch-Stift (2)
- in der Halteöse (41) des Haltestabs (3,4,4') lösbar festgelegt ist.

2. Kombinierte Touchstift-Halte- und Griffvorrichtung (1) nach Anspruch 1, **dadurch gekennzeichnet, dass**
die kombinierte Touchstift-Halte- und Griffvorrichtung (1) zumindest zwei Haltestäbe (3, 4, 4') aufweist, die jeweils einenends eine Halteöse (31, 41, 41') mit einem Innenumfang (32, 42, 42') haben, der einem Außenumfang (21) des Touch-Stifts (2) entspricht,
wobei in einer Benutzungsanordnung der kombinierten Touchstift-Halte- und Griffvorrichtung (1) die zwei Haltestäbe (3, 4, 4') parallel zueinander und mit den Halteösen (31, 41, 41') in die gleiche Richtung weisend und um eine Strecke (S) voneinander beabstandet angeordnet sind, die kürzer ist als der Touch-Stift (2).

3. Kombinierte Touchstift-Halte- und Griffvorrichtung (1) nach Anspruch 1 oder 2,
**dadurch gekennzeichnet, dass**
der eine Haltestab (4') oder ein erster Haltestab (4) an einem Innenumfang (42,42') der Halteöse (41, 41') eine Klemmvorrichtung (44) aufweist, die dazu ausgebildet ist, den Touch-Stift (2) in der Halteöse (41, 41') zu sichern.

4. Kombinierte Touchstift-Halte- und Griffvorrichtung (1) nach Anspruch 3,
**dadurch gekennzeichnet, dass**
die Klemmvorrichtung (44) eine an dem Innenumfang der Halteöse (41, 41') angeordnete Vorrichtung aus der Gruppe umfassend O-Ringe, bevorzugt Elastomer-O-Ringe, Druckstifte, oder Federstifte aufweist.

5. Kombinierte Touchstift-Halte- und Griffvorrichtung (1) nach Anspruch 3,
**dadurch gekennzeichnet, dass**
ein erster Haltestab (3) der zwei Haltestäbe (3,4) an einer von dem zweiten Haltestab (4) weg weisenden Seite an dem Innenumfang (32) zumindest eine Arretiervorrichtung (36) aufweist und der Touch-Stift (2) mit
- einem Ende eines ersten Abschnitts (21) in der Halteöse (31) des ersten Haltestabs (3) lösbar und an der Arretiervorrichtung (36) abgestützt festgelegt ist, und mit
- einem zweiten Abschnitt (25) in der Halteöse (41,41') des zweiten Haltestabs (4,4') lösbar festgelegt ist,
wobei sich eine Touch-Spitze (22) des Touch-Stifts (2) aus der Halteöse (41,41') herauserstreckt.

6. Kombinierte Touchstift-Halte- und Griffvorrichtung (1) nach Anspruch 5,
**dadurch gekennzeichnet, dass**
die zumindest eine Arretiervorrichtung (36) ein Pin (36) oder ein Überstand oder ein Ring oder ein Ringabschnitt ist.

7. Kombinierte Touchstift-Halte- und Griffvorrichtung (1) nach Anspruch 6,
**dadurch gekennzeichnet, dass**
der Touch-Stift (2) an seinem ersten Abschnitt (25) eine Verriegelungsausnehmung aufweist, die mit dem Pin (36) oder dem Überstand mit dem Ringabschnitt lösbar in Rasteingriff bringbar ist.

8. Kombinierte Touchstift-Halte- und Griffvorrichtung (1) nach zumindest einem der Ansprüche 1 bis 7,
**dadurch gekennzeichnet, dass** der Haltestab (3,4,4') an einem von der jeweiligen Halteöse (31,41, 41') abgewandten Ende (33, 43, 43') Befestigungsmittel aufweist, die ausgewählt sind aus der Gruppe die eine Bohrung (36), eine Durchgangsöffnung, eine Sackbohrung und Magnetelemente umfasst.

9. Gehäuse (110) eines portablen Computers (100) mit einem Touch-Display (120), **dadurch gekennzeichnet, dass**
das Gehäuse (110) des portablen Computers (100) mit dem Touch-Display (120) eine kombinierte Touchstift-Halte- und Griffvorrichtung (1) aufweist, die an einem Befestigungsabschnitt (111) des Gehäuses (110) befestigt ist, die eine kombinierte Touchstift-Halte- und Griffvorrichtung (1) nach zumindest einem der Ansprüche 1 bis 8 ist.

10. Gehäuse (110) eines portablen Computers (100) nach Anspruch 9,
**dadurch gekennzeichnet, dass**
das Gehäuse (110) einen Befestigungsabschnitt (111) aufweist, an dem Befestigungsmittel angeordnet sind, die mit den Befestigungsmitteln korrespondieren, die jeder Haltestab (3,4,4') an seinem von der jeweiligen Halteöse (31,41, 41') abgewandten Ende (33, 43, 43') aufweist, und wobei die Befestigungsmittel an dem Befestigungsabschnitt (111) ausgewählt sind aus der Gruppe die Stifte, Schrauben, Pins oder Magnete umfasst.

11. Gehäuse (110) eines portablen Computers (100) nach Anspruch 9 oder 10,
**dadurch gekennzeichnet, dass**
das Gehäuse (110) zumindest einen magnetischen Abschnitt an dem Befestigungsabschnitt (111) aufweist.

12. Gehäuse (110) eines portablen Computers (100) nach zumindest einem der Ansprüche Anspruch 9 bis 11,
**dadurch gekennzeichnet, dass**
der portable Computer (100) ein Tablet-Computer oder ein Laptop ist.

## Geänderte Patentansprüche

### Geänderte Patentansprüche gemäss Regel 137(2) EPÜ.

1. Kombinierte Touchstift-Halte- und Griffvorrichtung (1), ausgebildet zur Befestigung an einem Befestigungsabschnitt (111) eines Gehäuses (110) eines portablen Computers (100) mit einem Touch-Display (120), **wobei**
die kombinierte Touchstift-Halte- und Griffvorrichtung (1)
einen Touch-Stift (2), ausgebildet zum berührenden Betätigen des Touch-Displays (120), und zumindest einen Haltestab (3, 4, 4') aufweist, der einenends eine Halteöse (41) mit einem Innenumfang (42) hat, der einem Außenumfang des Mantels (21) des Touch-Stifts (2) entspricht,
wobei in einer Benutzungsanordnung der kombinierten Touchstift-Halte- und Griffvorrichtung (1) der Touch-Stift (2) in der Halteöse (41) des Haltestabs (3,4,4') lösbar festgelegt ist und mit dem Haltestab (3,4,4') einen Griff zum Tragen des portablen Computers (100) bildet.

2. Kombinierte Touchstift-Halte- und Griffvorrichtung (1) nach Anspruch 1, **dadurch gekennzeichnet, dass**
die kombinierte Touchstift-Halte- und Griffvorrichtung (1) zumindest zwei Haltestäbe (3, 4, 4') aufweist, die jeweils einenends eine Halteöse (31, 41, 41`) mit einem Innenumfang (32, 42, 42') haben, der einem Außenumfang (21) des Touch-Stifts (2) entspricht,
wobei in einer Benutzungsanordnung der kombinierten Touchstift-Halte- und Griffvorrichtung (1) die zwei Haltestäbe (3, 4, 4') parallel zueinander und mit den Halteösen (31, 41, 41') in die gleiche Richtung weisend und um eine Strecke (S) voneinander beabstandet angeordnet sind, die kürzer ist als der Touch-Stift (2).

3. Kombinierte Touchstift-Halte- und Griffvorrichtung (1) nach Anspruch 1 oder 2, **dadurch gekennzeichnet, dass**
der eine Haltestab (4') oder ein erster Haltestab (4) an einem Innenumfang (42,42') der Halteöse (41, 41') eine Klemmvorrichtung (44) aufweist, die dazu ausgebildet ist, den Touch-Stift (2) in der Halteöse (41, 41') zu sichern.

4. Kombinierte Touchstift-Halte- und Griffvorrichtung (1) nach Anspruch 3,
**dadurch gekennzeichnet, dass**
die Klemmvorrichtung (44) eine an dem Innenumfang der Halteöse (41, 41') angeordnete Vorrichtung aus der Gruppe umfassend O-Ringe, bevorzugt Elastomer-O-Ringe, Druckstifte, oder Federstifte aufweist.

5. Kombinierte Touchstift-Halte- und Griffvorrichtung (1) nach Anspruch 3,
**dadurch gekennzeichnet, dass**
ein erster Haltestab (3) der zwei Haltestäbe (3,4) an einer von dem zweiten Haltestab (4) weg weisenden Seite an dem Innenumfang (32) zumindest eine Arretiervorrichtung (36) aufweist und der Touch-Stift (2) mit
- einem Ende eines ersten Abschnitts (21) in der Halteöse (31) des ersten Haltestabs (3) lösbar und an der Arretiervorrichtung (36) abgestützt festgelegt ist, und mit
- einem zweiten Abschnitt (25) in der Halteöse (41,41') des zweiten Haltestabs (4,4') lösbar festgelegt ist,
wobei sich eine Touch-Spitze (22) des Touch-Stifts (2) aus der Halteöse (41,41') herauserstreckt.

6. Kombinierte Touchstift-Halte- und Griffvorrichtung (1) nach Anspruch 5,
**dadurch gekennzeichnet, dass**
die zumindest eine Arretiervorrichtung (36) ein Pin (36) oder ein Überstand oder ein Ring oder ein Ringabschnitt ist.

7. Kombinierte Touchstift-Halte- und Griffvorrichtung (1) nach Anspruch 6,
**dadurch gekennzeichnet, dass**
der Touch-Stift (2) an seinem ersten Abschnitt (25) eine Verriegelungsausnehmung aufweist, die mit dem Pin (36) oder dem Überstand mit dem Ringabschnitt lösbar in Rasteingriff bringbar ist.

8. Kombinierte Touchstift-Halte- und Griffvorrichtung (1) nach zumindest einem der Ansprüche 1 bis 7,
**dadurch gekennzeichnet, dass** der Haltestab (3,4,4') an einem von der jeweiligen Halteöse (31,41, 41') abgewandten Ende (33, 43, 43') Befestigungsmittel aufweist, die ausgewählt sind aus der Gruppe die eine Bohrung (36), eine Durchgangsöffnung, eine Sackbohrung und Magnetelemente umfasst.

9. Gehäuse (110) eines portablen Computers (100) mit einem Touch-Display (120),
**dadurch gekennzeichnet, dass**
das Gehäuse (110) des portablen Computers (100) mit dem Touch-Display (120) eine kombinierte Touchstift-Halte- und Griffvorrichtung (1) aufweist, die an einem Befestigungsabschnitt (111) des Gehäuses (110) befestigt ist, die eine kombinierte Touchstift-Halte- und Griffvorrichtung (1) nach zumindest einem der Ansprüche 1 bis 8 ist.

10. Gehäuse (110) eines portablen Computers (100) nach Anspruch 9,
**dadurch gekennzeichnet, dass**
das Gehäuse (110) einen Befestigungsabschnitt (111) aufweist, an dem Befestigungsmittel angeordnet sind, die mit den Befestigungsmitteln korrespondieren, die jeder Haltestab (3,4,4') an seinem von der jeweiligen Halteöse (31,41, 41') abgewandten Ende (33, 43, 43') aufweist, und wobei die Befestigungsmittel an dem Befestigungsabschnitt (111) ausgewählt sind aus der Gruppe die Stifte, Schrauben, Pins oder Magnete umfasst.

11. Gehäuse (110) eines portablen Computers (100) nach Anspruch 9 oder 10,
**dadurch gekennzeichnet, dass**
das Gehäuse (110) zumindest einen magnetischen Abschnitt an dem Befestigungsabschnitt (111) aufweist.

12. Gehäuse (110) eines portablen Computers (100) nach zumindest einem der Ansprüche Anspruch 9 bis 11,
**dadurch gekennzeichnet, dass**
der portable Computer (100) ein Tablet-Computer oder ein Laptop ist.
